# EUROPEAN PATENT APPLICATION

(11) **EP 2 551 771 A1**
(43) Date of publication of application: **30.01.2013**
(21) Application number: 11380063.5
(22) Date of filing: 28.07.2011
(51) Int. Cl.: G06F 9/54

(54) **Communication abstraction among partitions in integrated modular avionics**

(71) Applicant: Eurocopter Espania, Albacete (ES)
(72) Inventor: Catalan Alarcon, José Antonio, 02006 Albacete (ES); Esparcia Perez, Antonio, 02400 Hellin Albacete (ES); Lopez Jaquero, Victor Manuel, 02006 Albacete (ES); Montero Simarro, Francisco, 02006 Albacete (ES)
(74) Representative: Pouillot, Laurent Pierre Paul

(57) **Abstract**

The field of the invention is aircrafts. In particular, the invention applies to a distributed architecture of airborne computing systems called integrated modular avionics or IMA (3) having partitions (5) in hardware modules (6).

Integrated modular avionics (3) have an operating system (12) where is encapsulated a communication management layer between partitions (5) named mediator layer (11). The mediator layer (11) is reflecting a collective behaviour of communicating partitions (5) in the integrated modular avionics (3), thus taking in charge this communication between partitions (5), locally inside a single module (6) or externally between distinct modules (6).

This allows for a communication abstraction among partitions (5).

## Description

The field of the Invention is aircrafts. For instance, the invention is useful to rotary wing aircrafts or the like.

The invention is applied to airborne computing systems. These specific and demanding systems define the skilled man in the art as a specialist of these airborne computing systems.

Some automated technical processes usually called software units, are executed by such airborne computing systems. Such software run automated processing stages or steps. In aircrafts, some airborne computing systems operate so called Integrated Modular Avionics (IMA).

The integrated modular avionics (IMA) concept proposes an integrated computing architecture with application software portable across an assembly of common hardware modules. Although an integrated modular avionics (IMA) architecture imposes multiple requirements on the underlying Real-Time Operating System (RTOS), its modularity simplifies the development tasks of avionics software.

Some recent integrated modular avionics (IMA) comprise a real-time computer network airborne system having a number of physically distributed, but fully integrated computing resources, forming a so-called Distributed Integrated Modular Avionics (DIMA). In such a Distributed Integrated Modular Avionics (DIMA), various hardware modules and / or software units are capable of supporting numerous applications of differing criticality levels.

As the structure of the software in the IMA/DIMA network is unified, it is mandatory to use a common application programming interface (API) for access the hardware modules and other network resources. This simplifies the hardware modules and the software units integration. Such software units are called "partitions".

In short, an application programming interface (API) is a dedicated set of rules and specifications that partitions follow to communicate with each other. The application programming interface (API) serves as an interface between different software partitions and facilitates the partitions and / or hardware modules interaction.

An application programming interface (API) is usually created for software applications, data libraries, or the like, as a way of defining their vocabularies and resources request conventions (e.g. function-calling conventions). It may include specifications for routines, data structures, object classes, and protocols used to communicate between the consumer program and the implementer program of the application programming interface (API).

In integrated modular avionics (IMA or DIMA), focus is given on the software application layer, reducing the risk of defaults in the lower-level software layers. As integrated modular avionics modules often share an extensive part of their hardware and lower-level software architecture, the maintenance of these modules is easier than with previous specific architectures.

The background of the invention is exposed. At present, there is no overall standard that defines all the mandatory software units and / or hardware modules used in an integrated modular avionics (IMA) architecture.

However, some parts have been standardized such as the ones defined by the ARINC653 which is the most widely known standard for integrated modular avionics (IMA or DIMA), defining an application programming interface (API) called APplication Executive (APEX). Such an Application Executive (APEX) serves as the interface between each partition in a module and the core operating system. An Application Executive APEX API allows partititions to communicate by using APEX Channels. An APEX Channel is distinct from a physical communication channel connecting a cabinet including the module, to the IMA/DIMA network, e.g. Ethernet or the like.

According to the ARINC653 protocol:
- Partitions are the smallest executable software units in the system. They are independent in execution and memory management according to ARINC653 protocol.
- Module is a hardware component that contains at least the processing resources and memory. A set of at least one partition is executed in a module.
- Cabinet is the physical structure used in integrated modular avionics (IMA) to provide an environmental barrier and house the avionics module(s), cabinet resources, and avionics backplane.

According to the ARINC653 protocol, in each application layer, the software unit called partition has both its own memory space as well as a dedicated time slot. Within each partition, multitasking is allowed. The associated APEX provides services to manage partitions, processes and timing, as well as partition / process communication and error handling. The APEX defines Channels which link statically a source partition and a target partition, inside and/or outside the module including the source partition.

The ARINC653 protocol also defines programming and configuration interfaces that make it possible to ensure that an application is independent from the underlying software and hardware. A partitioning principle enables avionics functions of different levels to co-exist on a common platform, enabling these functions to be qualified by an incremental process, and also enabling a process to segregate function suppliers.

But, although widely used with success, the current communications among partitions according to mechanisms proposed by the ARINC653 protocol make the nowadays system software architecture quite rigid, since static dependencies are created between partitions.

Through partitioning, it is somewhat possible to enhance reusability, portability and scalability. Nevertheless, interconnections tend to reduce all these capabilities, since it would be less likely that a partition can work without the support of other partitions (called strongly coupled partitions). Then, the system would act as though it is quite monolithic.

Therefore, it would be valuable to be able to reduce the dependencies among partitions. However, reducing dependencies among partitions may cause drawbacks e.g. by: affecting the system performance and also involving the underlying real-time operating system (RTOS) also called Core Operating System (COS) which would forces to a re-certification process of this Operating System when applied to a critical system.

Moreover, Fault Tolerance mechanisms as Reconfiguration ("redistribution of some logical element/s over one or more physical elements in case of failure") would be impossible to implement, since there is no way to avoid this strict structure in execution time.

Mention is now made of certain documents relating to communication among partitions in integrated modular avionics.

The document IEEE978-1-4244-2208-1/08 entitled "DISTRIBUTED IMA AND DO-297: ARCHITECTURAL, COMMUNICATION AND CERTIFICATION ATTRIBUTES" (by Roland Wolfig and Mirko Jakovljevic), from the IEEE 27th Digital Avionics Systems Conference on October 26-30, 2008), describes a Distributed Integrated Modular Avionics (DIMA) and currently evaluated approaches in the aerospace domain. The DIMA is an architectural approach consisting of distributed hosts connected by a safety-critical communication system. This document exposes the connection between the distributed architectural approach, its core communication system and the development and certification process. For a safety-critical and secure communication, distributed integration, hierarchical separation, partitioning and physical distribution in addition to IMA properties like flexibility, modularity, reusability and interoperability are described.

The document W00186442 relates to a communication handling in an integrated modular avionics using a queue message process. This document describes various techniques for interapplication communication and handling of 1/0 devices for applications in an IMA system. A step of registering a circular outgoing message queue is including another step of abstracting the outgoing message queue to a communication primitive format to appear to be a device driver command message when read by the plurality of partitioned applications. This document proposes methods and apparatus for an IMA system which comply with the ARINC653 protocol.

The document US2011071709 describes a mock-up with electrical exchanges relating to analog and/or discrete signals that are simulated. For the digital models, their level of representativity is such that they can be mixed via an interface card with real pieces of equipment. Several pieces of equipment and / or components including partitions as per ARINC653 protocol may be simulated.

Summarizing the invention against this background, the invention allows for a communication abstraction among partitions in integrated modular avionics. In this purpose, communication behaviour is handled at the level of the operating system, through a mediator layer.

Now, a brief description of the drawings is presented. The invention and its advantages appear in greater detail from the following description of embodiments given by way of illustration and with reference to the accompanying figures, in which:
- Figure 1 shows an example of distributed airborne computing system forming a Distributed Integrated Modular Avionics (DIMA) compliant to ARINC653 protocol, to which the invention is applied;
- Figure 2 shows an example of encapsulating collective behaviour in a Mediator Layer, in order to control and coordinate interactions of a group of partitions by acting as an intermediary that keeps source and target partitions from communicating each other explicitly;
- Figure 3 shows an embodiment of Routing Tables Management Block Diagram in a general DIMA operating method according to the invention;
- Figure 4 shows an embodiment Reference Model according to the invention; and
- Figure 5 is a diagrammatic longitudinal elevation view of a rotary wing aircraft of the invention, equipped with a Distributed Integrated Modular Avionics (DIMA) arranged for communication abstraction among partitions.

The invention is defined in the claims.

Below, in a detailed description, the presently preferred embodiments of the invention and some of their implementations are described.

In the figures, the reference 1 generally designates an aircraft. In embodiments, the aircraft 1 is a helicopter. This aircraft 1 comprises one or a plurality of onboard computing systems 2. One or a plurality of integrated modular avionics 3 (IMA) are run onboard the aircraft 1. The Integrated Modular Avionics (IMA) 3 is compliant to the ARINC653 protocol and forms a Distributed Integrated Modular Avionics (DIMA) on board the aircraft 1.

In such an onboard computer system 2 are comprised: a series of executable software units 4 also called partitions 5, at least one hardware module 6 that contains at least the processing resources and memory for executing at least one partition 5 in this hardware module 6, and at least one physical cabinet structure 7 housing, in an environmental barrier, at least one hardware modules 6, cabinet resources 9 and avionics backplane 8.

The invention comprises an overall method 46 of operating such an integrated modular avionics 3, in a distributed architecture. In such a purpose, the onboard computer system 2 comprise at least one computer-readable medium, encoded with instructions which, when executed, causes the computer system 2 to perform automated processing operations or steps called stages of the method 46 as per the invention. The computer system 2 has an operating system 12 which forms a logical software level for the integrated modular avionics 3. Each hardware module 6 comprises such an operating system 12 level.

On board the aircraft 1, the operating method 46 is executed with the aid of the computer system 2. When communication between partitions 5 is required, a communicating stage is performed in the distributed architecture.

For a so-called "local" communication this automated processing (communicating) stage handles communication between partitions 5 located in the same module hardware 6, via application executive channels 10 (APEX).

When a communication involves partitions 5 in distinct cabinets 7 of the distributed architecture, this communication is called external (i.e. is not local). In an external communication, a physical means 100 is used to mutually connect communicating distinct cabinets 7 and partitions 5. Such a physical means 100 is e.g. an Ethernet network. Although external communication requires physical means 100 for cabinet 7 to cabinet 7 data exchange, inside each hosting hardware module 6, the partitions 5 are linked via APEX channels.

Besides, the invention provides for:
- encapsulating a communication management layer also named mediator layer 11 at the operating system 12 level of the hardware module 6;
- each mediator layer 11 reflecting updated collective behaviour of the communicating partitions 5, thus taking in exclusive charge the communication with other partitions 5 into the distributed integrated modular avionics 3, i.e. in the distributed architecture.

As of all integrated modular avionics 3 in the distributed architecture, the mediator layer 11 of the invention is a communication management layer acting at the logical software level. In a given cabinet 7, each partition 5 is linked via the APEX channels 10 to this mediator layer 11 e.g. for local partition to partition communication. Besides, this mediator layer 11 links the given cabinet 7 to other distinct cabinets 7, for external communication.

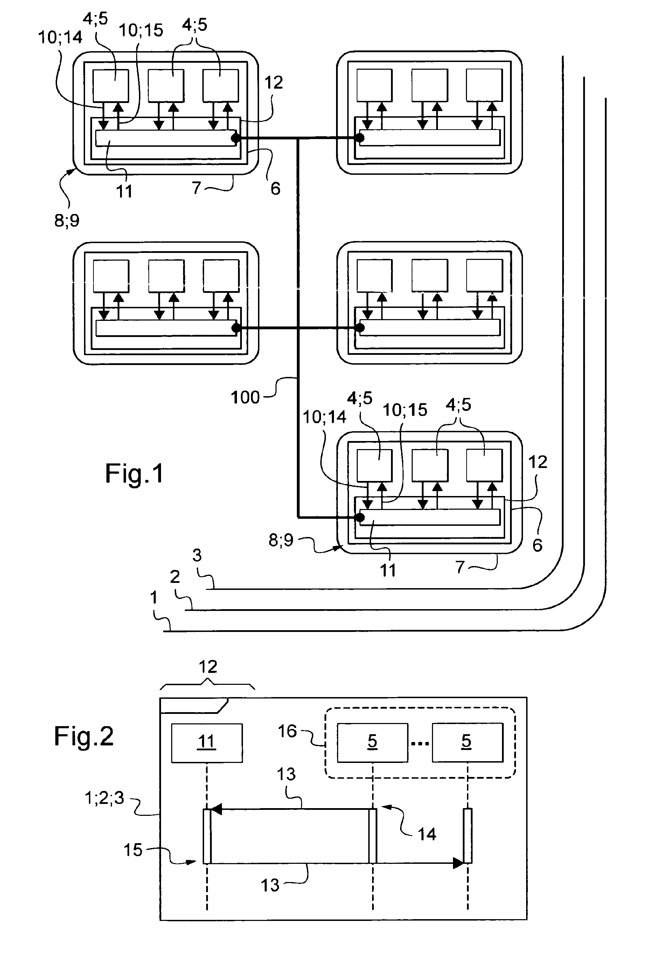

For communication purposes, some examples of the invention provide that for each partition 5 in a given hardware module 6 there is only two application executive channels 10, e.g.:
- one output application executive channel 14 (among channels 10) for transmission from one given sender partition 5 (then called a source partition 5 on the left in figure 2), and
- one input application executive channel 15 (among channels 10) for reception by another given partition 5 (then called a receiving partition 5 on the right in figure 2).

Other way speaking, either in a local or external communication, the mediator layer 11 receives a message from the source partition 5, this message being transmitted then from the mediator layer 11 to the receiving partition 5.

For instance on figure 2, when communicating a message 13 between a source partition 5 and a receiving partition 5, the message 13 is sent from the source partition 5 to the mediator layer 11 at operating system 12 level, through an output application executive channel 14. The mediator layer 11 is handling the forwarding of the message 13 to the input application executive channel 15 for the receiving partition 5. Here, the source partition 5 and the receiving partition 5 are called « colleagues » partitions 5.

In figure 2 is shown a presently preferred embodiment, the encapsulating of collective behaviour of such « colleagues » partitions 5 is obtained in the collaborative layer 11 called « Mediator Layer », which is responsible for controlling and coordinating the interactions of a group 16 of partitions 5. In other words, the collaborative layer 11 called « Mediator Layer » serves as an intermediary that keeps the message sender (i.e. source partition 5) and the message target (i.e. receiving partition 5) from communicating each other « explicitly ». In this context, several participants can be identified:
- Mediator agent: i.e. the mediator layer 11 which defines an interface to communicate with « Colleague » partitions 5, considered as objects. The Mediator agent implements the cooperative behaviour by routing requests between the appropriate Colleagues partitions 5.
- Colleagues partitions 5: the objects which send and receive requests from a Mediator. The Mediator agent layer is located at Core Operating System 12 level.

Additionally, the Mediator agent forms a layer 11 that should manage all information about the location of the partitions 5 involved in the distributed architecture and that would be able to send information between partitions allocated either in the same ARINC653 protocol module or in different protocols

In case partitions 5 involved in the communication are allocated in different modules 6, different physical means 100 could be used in order to reach destination partition, such as ARINC429, MIL STD 1553B, RS422, and Ethernet. In embodiment of figure 1, Ethernet is used as the physical mean 100.

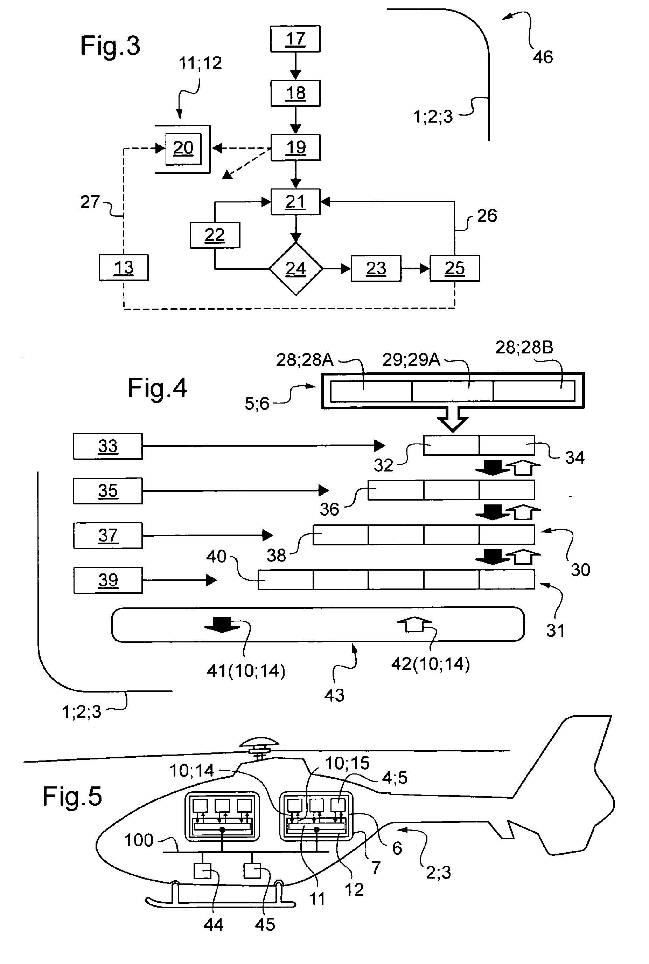

In figure 3, an example of (sub) process for managing Routing Tables 20 in the collaborative layer 11 is fully described. This process belongs to the overall operating method 46 of the invention. The Routing Tables 20 are used by the Collaborative Layer 11 to route the messages (e.g. like message 13 on figure 2) among partitions 5.

In figure 3, the invention provides for main prosecution steps and treatments by the method 46 onboard computer system 2, so as to operate the distributed architecture of integrated modular avionics 3 (including the OS mediator layers 11).

From top to bottom, the first block illustrates an initialization step 17. When this initialization step 17 is completed, a subsequent step 18 of interchanging of local information is executed. When the step of interchanging of local information 18 is completed, a subsequent step 19 of creation of Routing Tables 20 is executed.

A step 21 of waiting for changes is executed after a terminated occurrence of the step 19 of creation of Routing Tables 20. A subsequent questioning step 24 is accessed from the step 21 of waiting for changes.

From the questioning step 24 two feed back loops are accessed each one by one of two routes: the (left hand) negative route 22 indicating that no change occurred, so that the step 21 of waiting for changes is executed again. The (right hand) positive route 23 is indicating that one or a plurality of changes occurred, so that the step 21 of waiting for changes is not to be executed immediately again for update or creation of the Routing Tables 20.

In the so called « yes feed back loop » including the positive route 23, the questioning step 24 is followed by a step 25 of changes notification. After this step 25 of changes notification is executed, the positive route 23 finally reaches the step 21 of waiting for changes which is executed again, through a return branch 26.

With the invention, the mediator Layer 11, in few words, is mainly in charge of managing communications between partitions 5. Therefore, when the mediator Layer 11 receives a message 13 from a particular partition 5, it is this mediator layer 11 which has to identify which is the receiver of the message 13 and sent it to a final receiver, i.e. another partition 5.

The mediator Layer 11 should distinguish firstly if the destination partition 5 is either located either in the same module 6 (local communication) or in an external module 6 (external communication). This is the reason why the mediator Layer 11 must maintain information about the location of all partitions 5 that are comprised in the distributed architecture of the System 2 with integrated modular avionics 3.

The information about the location of different partitions 5 is stored in a special kind of Routing Tables 20, managed by the mediator Layer 11 allocated in the modules 6 that comprises the system 2. From the figure 3 again, the Routing Tables 20 management Block Diagram process according to the invention is exposed.

At the initialization step 17 the mediator Layer 11 collects information / data relating to its module 6, i.e.:
- partition ID 28, corresponding to the set of partitions (5) running in the module (6);
- module ID 29;
- TCP/IP Address 30; and
- network Adapter 31.

Once this local information has been gathered, each module 6 transmits it to the rest of modules 6 that comprises the general system. The main objective of this is to share the local information between all modules 6 which will allow them to create the Routing Tables 20. The Routing Tables 20 that are used in the invention are described below.

During step 18, in order to transmit local information, a message 13 reflecting an "Initial Routing Table 20" is used by each module 6, transmitting all information / data that were detailed above.

Once the Routing Tables 20 are created at step 19, the module 6 can start its normal operation in the system 2 carrying out the functionality it was designed for. During normal operations the Routing Tables 20 are not static due to changes which may occur and are updated throughout operation of the system 2.

For instance, when considering a reconfiguration process, in case a particular partition 5 is detected as a source of error, a health monitoring device 45 (figure 5) in the system 2 could decide to stop the partition 5 victim of the error and to launch a similar task in another module 6 in order to avoid this error.

Both modules 6 in this situation should inform about the changes occurred, since Routing Tables 20 have to be updated in order to reflect every new relevant situation. This is operated by the steps 24 and 25, in the positive feed back loop. The update of the Routing Tables 20 is exemplified by the transfer stage 27 of a change notification, on figure 3.

In order to allow modules 6 to inform about these types of changes a "Routing Table Update" message (13) is transmitted among modules 6 sharing information about the current local situation. This message 13 could be either periodically interchanged among the different modules 6 (that are comprised by the system) 2 or just sent when a specific change situation has occurred.

The mediator Layer 11 is responsible for generating the "Routing Table Update" message (e.g. message 13).

Once a change has been detected, each module 6 has to update the Routing Tables 20 with the new information received through the "Routing Table Update" message (13). After that, the module 6 keeps working as planned.

In the invention, the Routing Tables 20 store all the information related to determine where a specific partition 5 is located in the system 2 and how it can be reached.

In figure 4, it is shown how a partition 5 is identified by an own ID 28 (unique identifying descriptor in all the system 2), a Module ID 29, a TCP/IP Address 30 and Network adapter 31. The last value is used in order to know the network adapter 31 that should be used in order to reach the destination module 6. This value is mandatory in case one module 6 can manage two or more network adaptors 31 simultaneously.

In figure 4, the source partition is marked with a « source partition ID » 28A, the destination partition is marked with a « destination partition ID » 28B. A Module ID 29 is a « source module ID » 29A.

Always on figure 4, information is introduced by each partition 5 as a message header 32 at Application Layer 33 following the OSI Reference Model.

Data are also shown at 34. A transport layer 35 has a proper transport header 36.

An internet layer 37 has a proper internet header 38. A network interface layer 39 has a proper network header 40. This allows for a transmitting stage or sending step 41 or receiving step 42 of messages 13.

The following Table 1 is an example of Routing Table 20.

**Table 1**

| Network Adaptor (31) | Destination (30) TCP/IP Address | Module (6) | Partition (5) |
|---|---|---|---|
| Eth1 | 127.0.0.1 | M1 | P1.1 |
| Eth1 | 127.0.0.1 | M1 | P1.2 |
| Eth1 | 127.0.0.1 | M1 | P1.3 |
| Eth2 | yyy.yyy.yyy.yyy | M2 | P2.1 |
| Eth2 | yyy.yyy.yyy.yyy | M2 | P2.2 |

Additionally, some metrics can be added in case some determinism is required in a real time environment.

In conclusion, this Routing Table 20 stores all the information needed to determine where to find a target receiving partition 5. Thus, the Collaborative Layer 11, according to this information could determine whether the destination partition 5 is local or external. In case the partition 5 is local, the mediator Layer 11 is able to pass directly the message 13 to the corresponding partition 5. In case of external partition 5, the Collaborative Layer 11 sends the message 13 outside the module 6, through the corresponding network adaptor 31 to the subsequent TCP/IP address 30.

In an embodiment, the message generation is as follows. The Collaborative Layer 11 needs some information in order to be able to route the message 13 to the corresponding partition 5. The information the Collaborative Layer 11 deals with is exemplified below, this data allows the Collaborative Layer 11 to address the message 13 either locally or externally.

The fields that comprise the message 13 header are the following:
- source partition's ID : 28A
- source module's ID : 29A ;
- destination partition's ID : 28B.

In an embodiment, to communicate a message 13 between a sender partition 5 and a receiving partition 5, the mediator layer 11 I is taking into account the ID (28B) of the destination partition 5. The routing table 20 decides whether the message is dedicated to local communication inside a single hardware module 6 or to external communication between two distinct hardware modules 6.

In an example of method 46, to operate a distributed architecture of integrated modular avionics 3 (IMA) onboard an aircraft 1, communication drivers 43 (figure 4) are employed to interchange a message 13 between a source partition 5 and a destination partition 5 each located in a distinct hardware module 6.

An object of the invention is a computer system 2 operating a distributed architecture of integrated modular avionics 3 (IMA) onboard an aircraft 1. Said integrated modular avionics (IMA) is compliant to the ARINC653 protocol, and operates as explained above (with the abstracting communication method 46), thanks the aid of said computer system 2.

Such a computer system 2 cooperates with at least one onboard structure 44 (figure 5) of the aircraft 1 which is critical to this aircraft 1. For instance, this onboard structure 44 comprises an automatic pilot or vital equipment. Thanks to the invention the following benefits can be obtained: improve the capability to add, upgrade, or change functionality, reduce wiring length, implement new reconfiguration mechanisms, management of spare resources, enhance operational reliability and application portability.

The invention also comprises an aircraft 1. This aircraft comprises a computer system 2 operating a distributed architecture of integrated modular avionics 3 onboard. On the example of figure 5 the aircraft 1 is a rotary wing aircraft.

The invention provides for abstracting the communications among ARINC653 protocol partitions by encapsulating collective behaviour in a separate Mediator Layer 11, which will be in charge of managing communications.

This invention is focused on improving different aspects that can be considered limitations in prior ARINC653 protocol-based Systems using a distributed architecture based on Ethernet links. The main enhancements forecast as of ARINC653 protocol-based architectures are due to, e.g. : the rigid architecture imposed, a partition highly dependant of the set of APEX channels to communicate with other partitions which provokes this partition always has to be executed in the same context in order to carry out its functionality based on a set of inputs and outputs, the large quantity of channels, the high number of channels that a particular partition should manage in order to communicate or interchange messages with other partitions.

The invention relates to define the mechanisms to implement communication abstraction in a Distributed Architecture-based on Integrated Modular Avionics principles, leading to solve the current limitations detected in the ARINC653 protocol Standard (e.g. First Generation or « 1 G ») and introduce several benefits.

In order to achieve this objective, the invention is based on abstracting partition from communication issues, in other words, avoiding that partitions 5 from knowing about how communication tasks are carried out. This invention proposes introducing a communication management layer at Operating System Level 12, named mediator Layer 11, which is responsible for controlling and coordinating the interactions between partitions.

Furthermore, the invention reduces the set of channels (e.g. 10, 14 and 15) to be employed by a partition 5, since one of this should not use a specific channel to communicate with a particular destination.

According to the invention just one (single e.g. 14) channel must be used for transmitting information and another one (single e.g. 15) channel for receiving. Thus, the message is sent to the Operating System through a special APEX channel 10, the Collaborative Layer 11 is responsible for forwarding it to the correct partition 5. The number of channels 10 is reduced to the minimum, two channels, i.e. the output or Transmission (unique) channel, and the input or Reception (unique) channel.

As previously said, the Collaborative Layer 11 is in charge of sending a concrete message coming from a source partition to the destination partition. Therefore the destination partition can be located in the same module (i.e. local communication) or even in an external module (i.e. external communication) and the Collaborative Layer is going to use the Routing Tables 20 to determine when was sent a message from the source partition to the destination partition, either as a local or external communication. The external communication is possible since the Collaborative Layer is able to use the corresponding driver 43 linked to the external interface to be used.

Now that the invention has been described, some of the presently known benefits that could be obtained through the invention are exposed: the invention reduces the set of channels to one for transmission and one for reception ; the invention decouples partitions, so this invention promotes loose coupling between partitions and partitions become more independent ; since the Collaboration layer « hides » all communication activities that it implements, the user is able to better understand the system and the interactions that the applications and partitions share ; partitions and spare partitions can be added and / or removed and / or modified in an easier way as they depend less on each other ; implementing fault tolerance mechanisms such as reconfiguration or redundancy is available easily since the partitions are independent of the platform where they are executed, since its communications are managed by the Collaborative Layer ; different embodiments of the invention are available, e.g.: by a mediator Layer integrated in the own Operating System, which would improve communication performance ; or by generalizing the concept of Colleague to most (all) the items (sensors, actuators, etc.) involved in an Avionics System instead of focusing it just on partitions (this gives reasons to new Distributed Avionics Architectures).

Other advantages of the invention can be summarized in the following points: a mediator localizes behaviour that otherwise would be distributed among several partitions. Changing this behaviour requires changing mediator only; partitions ca be reused as is ; partitions are decoupled, allowing that a mediator promotes loose coupling between partitions ; protocols can be simplified, since a unique mediator replaces many-to-many interactions with one-to-many interactions between the Mediator and its Colleagues. One-to-many relationships are easier to understand, maintain and extend; the way partitions cooperate is abstracted, making Mediation an independent concept and encapsulating it in just an object allowing focusing on partition's individual behaviour instead of focusing on how object interacts.

Nevertheless, the invention is not limited to the embodiments described. Conversely, it includes any equivalents of the described characteristics.

## Claims

1. A method (46) of operating an integrated modular avionics (3) in a distributed architecture onboard an aircraft (1), said integrated modular avionics (3) being compliant to the ARINC653 protocol and having an operating system (12), the method being executed through automated processing stages, with the aid of a computer system (2) comprising: a plurality of partitions (5) forming each an executable software unit, at least one hardware module (6) that contains at least processing resources and memory for executing at least one partition (5) in this hardware module (6), and at least one physical cabinet (7) structure housing in an environmental barrier at least one hardware module (6), cabinet resources and avionics backplane; a communicating stage providing when required, one partition (5) to communicate with another partition (5) via application executive channels (10); wherein the method comprises:
- encapsulating a communication management layer named mediator layer (11) at the operating system (12) level of the hardware module(s) (6);
- the mediator layer (11) reflecting collective behaviour of the communicating partitions (5), thus taking in exclusive charge the management of the communication via application executive channels (10) among the communicating partitions (5) in the distributed architecture of integrated modular avionics (3).

2. The method (46) according to claim 1,
**characterized in that** the computer system (2) comprises an operating system (12) forming a real-time logical software level, the mediator layer (11) being a communication management layer at this operating system (12) level.

3. The method (46) according to claim 1,
**characterized in that**, for communication among partitions (5) the method provides only two application executive channels (10) per partition (5), one output application executive channel (10-14) for transmission to the mediator layer, and one input application executive channel (10-15) for reception from the mediator layer.

4. The method (46) according to claim 1,
**characterized in that**, for communicating a message (13) between a source partition (5) and a destination partition (5), the message (13) is sent to the operating system (12) through an output application executive channel (10-15), at a transmitting stage of the method (46), the mediator layer (11) is handling the forwarding of the message (13) to an input application executive channel (10-14) for the destination partition (5).

5. The method (46) according to claim 1,
**characterized in that**, for communicating a message (13) between a source partition (5) and a destination partition (5), the mediator layer (11) comprising at least one routing table (20), the method (46) provides for a reading stage involving deciding from the routing table (20) whether the message (13) is dedicated to a local communication inside a single hardware module (6) or to an external communication between two distinct hardware modules (6).

6. The method (46) according to claim 1,
**characterized in that** the distributed architecture of integrated modular avionics (3) comprises communication drivers (43) for external message (13) communication between a source partition (5) and a destination partition (5) each located in a distinct hardware module (6), the mediator layer (11) of the operating system (12) comprising at least one routing table (20), said mediator layer (11) deciding which communication driver (43) has to be linked to the destination partition (5).

7. A computer system (2) operating a distributed architecture of integrated modular avionics (3) onboard an aircraft (1), said integrated modular avionics (3) being compliant to the ARINC653 protocol, wherein the method (46) according to any claim from 1 to 6 is executed with the aid of said computer system (9) **characterized in that** the computer system cooperates with at least one onboard structure (44) of the aircraft (1), said onboard structure (44) being critical to the aircraft (1), said onboard structure (44) being in charge of operating onboard at least one pre-certified process.

8. An aircraft (1)
**characterized in that** this aircraft (1) comprises a computer system (2) according to claim 7 and operating a distributed architecture of integrated modular avionics (3) onboard the aircraft (1), said integrated modular avionics (3) being compliant to the ARINC653 protocol, the aircraft (1) being a rotary wing aircraft.
